# FASCICULE DE BREVET EUROPEEN

(11) **EP 3 755 829 B1**
(45) Date de publication et mention de la délivrance du brevet: **10.12.2025**
(21) Numéro de dépôt: 19704823.4
(22) Date de dépôt: 14.02.2019
(51) Int. Cl.: D01G 11/00, D04H 1/492

(54) **INSTALLATION DE FABRICATION DE NON-TISSÉ**
ANLAGE ZUR HERSTELLUNG VON VLIESSTOFFEN
NONWOVENS PRODUCTION FACILITY

(30) Priorité: 22.02.2018 FR 1870191
(43) Date de publication de la demande: 30.12.2020
(73) Titulaire: ANDRITZ Perfojet SAS, 38330 Montbonnot (FR)
(72) Inventeur: NOELLE, Frédéric, 38330 Saint-Nazaire-les-Eymes (FR)
(74) Mandataire: Eidelsberg, Olivier Nathan
(86) Numéro de dépôt international: PCT/EP2019/053736
(87) Numéro de publication internationale: WO 2019/162196

(56) Documents cités:
- EP-A1- 0 293 590
- CN-Y- 201 406 492
- DE-A1- 102006 045 047
- FR-A- 1 477 755
- FR-A- 893 215
- US-A- 3 941 530
- US-A- 5 989 113
- US-A- 6 061 876

## Description

La présente invention se rapporte au recyclage de déchets de production de non-tissé consolidé par jets d'eau dit spunlace et, plus particulièrement, au recyclage des lisières de production.

Une ligne de production de non-tissés consolidés par jets d'eau comprend, d'amont en aval, des machines permettant l'ouvraison et le mélange de fibres, une ou des cardes pour la formation des voiles ou nappes de fibres, une machine de consolidation par jets d'eau, un four de séchage et un enrouleur. La largeur de production brute est généralement comprise entre 2,5 et 4,5 m. La production est soit enroulée et refendue en ligne à une vitesse de production généralement comprise entre 50 m/mn et 300 m/mn, soit enroulée en bobines jumbo, qui sont ensuite déroulées et refendues hors ligne à des vitesses plus élevées, jusqu'à 1 000 m/mn.

Les lisières représentent généralement de 3 à 5% de la production. Elles sont de plus en plus recyclées pour des raisons économiques. Dans ce cas, elles sont effilochées avec des effilocheuses pour en séparer les fibres, puis renvoyées dans les machines d'ouvraison et de mélange pour être recyclées dans la production.

Le principal problème du recyclage des lisières avec les solutions connues d'effilochage est qu'elles ont un impact non négligeable sur la qualité de la production finale. On note de nombreux amas de fibres dans les non-tissés, des boutons ou des nœuds dits "neps", qui sont dus à une séparation insuffisante des fibres lors de l'effilochage. Il n'est pas rare de trouver des amas de fibres de 1 mm de diamètre, voire plus. On note aussi une réduction conséquente de la longueur moyenne des fibres lors de l'effilochage, ce qui a un impact négatif sur les résistances des non-tissés produits. Les longueurs moyennes sont inférieures à 25 mm pour des fibres de longueur initiale de 38 mm.

Or, on a trouvé et c'est l'objet de la présente invention, une solution de recyclage des lisières et de déchets de production de non-tissés spunlace, qui, non seulement ne produit pas de défauts visibles à l'œil nu dans les non-tissés, mais est également meilleure en terme de longueur moyenne des fibres recyclées.

L'installation de recyclage de non-tissé suivant l'invention comprend une effilocheuse. Elle est caractérisée par une carde à chapeaux sans travailleur montée en aval de l'effilocheuse dans le sens de passage des non-tissés et des fibres dans l'installation. De préférence, la carde est montée immédiatement après l'effilocheuse, donc sans autre dispositif de traitement intermédiaire, mais avec tout de même sa cheminée d'alimentation et son silo intermédiaire de stockage, qui permet de réguler le débit de fibres.

La carde à chapeaux est utilisée pour le traitement des fibres de coton et dans les opérations du système de filature du coton. Elle a des brosses métalliques quasi-plates ou des garnitures plates appelées chapeaux, qui sont regroupées en une chaîne sans fin, qui entoure partiellement le grand tambour. Les fibres sont travaillées entre les chapeaux et le tambour, puis transférées au cylindre peigneur. La carde à chapeaux, qui n'est pas utilisée jusqu'ici pour les non-tissés, a l'avantage de carder les fibres d'une manière ménagée, contrairement à une carde d'un type autre qu'une carde à chapeaux, notamment d'une carde à travailleurs, telle qu'elle est utilisée en tant que carde principale dans une installation de production de non-tissés. Elle sépare bien les fibres et en sépare les boutons, nœuds, et autres amas néfastes à la qualité, car les chapeaux ont une action de cardage sur une grande surface du tambour et éliminent les boutons, les nœuds de fibres, lorsque celles-ci ne s'ouvrent pas ou ne se démêlent pas. Les boutons sont éliminés par le dispositif de nettoyage des chapeaux. Les chapeaux donnent à la fois une forte action de cardage et l'élimination des nœuds et boutons et effilochés de fibres insuffisamment ouvertes pour être recyclées en production de non-tissés.

Au FR 893 215, on propose d'utiliser une carde à travailleurs. Les travailleurs ont une action de cardage des fibres limitée à leur génératrice en regard du tambour, donc sur une très petite surface. De plus, les travailleurs n'ont pas de fonction de nettoyage et n'éliminent pas les nœuds et boutons comme le font les chapeaux. Dans le cas de fibres très courtes, comme on peut en trouver dans les effilochés de non-tissés, les travailleurs peuvent créer des nœuds et boutons supplémentaires.

Au US 3 941 530 A, on décrit une installation de fabrication de non-tissés comprenant une installation de recyclage des lisières de production ayant une effilocheuse.

Au US 5 989 113 A, on décrit une autre installation de fabrication de non-tissés.

Dans le mode de réalisation le plus achevé de l'installation suivant l'invention, l'effilocheuse a un rouleau d'effilochage garni de pointes coniques, éventuellement cylindroconiques. La hauteur des pointes, qui correspond à la hauteur du cône, va de 5 à 25 mm, en allant de préférence de 10 à 20 mm. Les pointes ont un diamètre de la base de 2 à 8 mm, de préférence de 2 à 3 mm. La distance entre les axes des pointes est comprise de préférence entre 5 et 20 mm. Les pointes sont inclinées dans le sens de rotation du rouleau d'effilochage. Elles font un angle de 20° à 50° avec la perpendiculaire à la surface latérale extérieure du rouleau d'effilochage.

Grâce à cette effilocheuse à pointes, on obtient un effilochage ménagé, qui porte moins atteinte à la longueur des fibres que des garnitures à dents triangulaires plus agressives.

De préférence, on effectue, avant, notamment juste avant, l'effilochage, un ensimage des lisières qui est réalisé avec de l'eau additionnée d'un produit d'ensimage. L'ensimage est appliqué, de préférence, par pulvérisation avec des buses d'une solution d'eau et de produit d'ensimage de 0,5 à 10% en poids suivant les produits utilisés. A titre d'exemple, un bon produit d'ensimage est le Lertisan de la société allemande Zschimmer & Schwarz, qui est un produit contenant polyglycol et un agent antistatique. Les produits d'ensimage sont composés notamment d'alcool gras et d'antistatiques, par exemples d'alcool en C8 à C12 éthoxylés.

L'invention vise aussi l'application d'une installation suivant l'invention à la fabrication de non-tissés dans une installation comprenant, d'amont en aval successivement, un dispositif d'ouvraison et de mélange de fibres, une carde principale d'un type autre qu'une carde à chapeaux, notamment une carde à travailleurs, un dispositif de consolidation par jets d'eau, un sécheur et une enrouleuse. Il est prévu un dispositif pour envoyer des fibres sortant de la carde à chapeaux au dispositif d'ouvraison et de mélange de fibres, le cas échéant avec un stockage intermédiaire.

L'installation de fabrication comprend un dispositif de coupe en aval de l'enrouleuse. Des déchets de coupe de non-tissés sont envoyés à l'effilocheuse, de préférence en passant d'abord par le dispositif d'ensimage.

Les fibres de recyclage obtenues sont recyclées à des pourcentages variables, généralement de 3 à 10%, soit directement réintroduites dans une chargeuse peseuse de l'ouvraison mélange de la ligne de production, soit via une presse à balle et une chargeuse peseuse de l'ouvraison mélange de la ligne de production.

Les fibres obtenues présentent des nœuds ou neps de moins de 0,12 mm de diamètre et mieux de moins de 0,10 mm de diamètre. La longueur des fibres représente au moins 70% de leur longueur initiale. La longueur moyenne des fibres est supérieure à 26 mm pour des fibres de longueur initiale de 38 mm.

Aux dessins annexés, donnés uniquement à titre d'exemple :
- la figure 1: est un schéma de circulation d'une installation de recyclage suivant l'invention et de la ligne de production de non-tissés associée ;
- la figure 2: est une vue en élévation d'une effilocheuse à pointes ;
- la figure 3: représente une partie du rouleau garni de pointes métalliques ;
- la figure 4: est une vue en coupe d'une pointe métallique de l'effilocheuse et
- la figure 5: est une vue en coupe d'une carde à chapeaux.

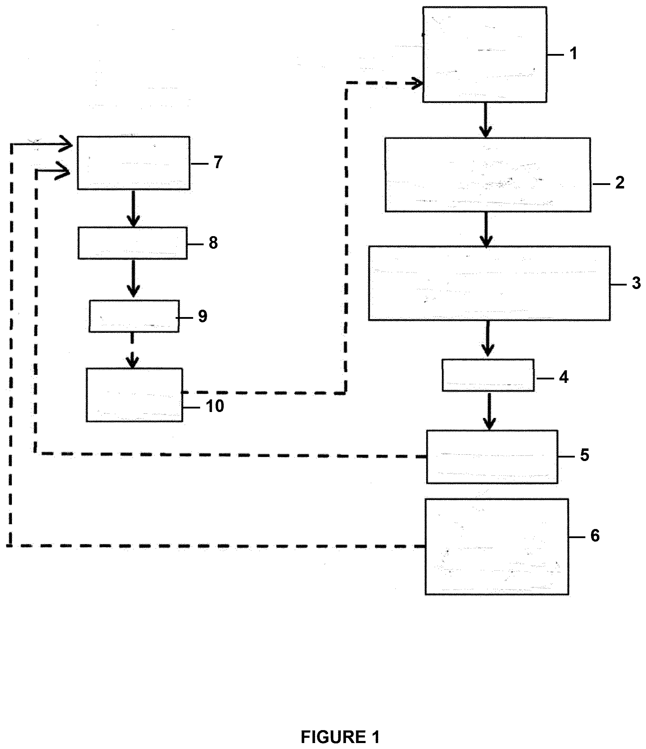

La ligne de production de non-tissés illustrée à la figure 1 comprend un dispositif 1 d'ouvraison et de mélange de fibres, qui envoie des fibres ouvertes et mélangées à une carde 2 d'un type autre qu'une carde à chapeaux, notamment à une carde à travailleurs. Le voile cardé sortant de la carde 2 est consolidé dans un dispositif 3 de consolidation par jets d'eau en une nappe humide, qui est envoyée à un sécheur 4. La nappe séchée va à une enrouleuse 5, le cas échéant, en étant ensuite déroulée, puis découpée et réenroulée en 6.

Les chutes de l'enrouleuse 5 et de la découpe en 6 sont envoyées à un dispositif d'ensimage 7, puis à une effilocheuse 8 à pointes, les fibres effilochées sortant de l'effilocheuse 8 sont cardées dans une carde 9 à chapeaux. Le voile de carde est envoyé éventuellement après un stockage 10 intermédiaire, au dispositif 1 d'ouvraison et de mélange.

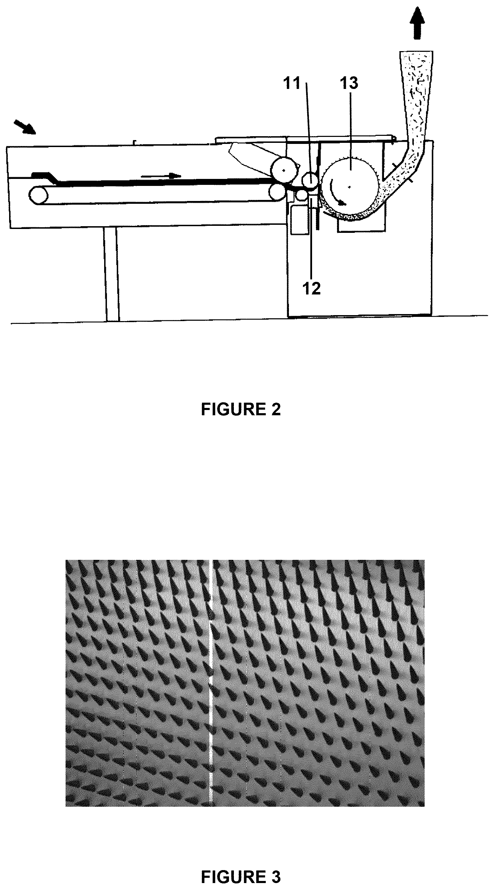

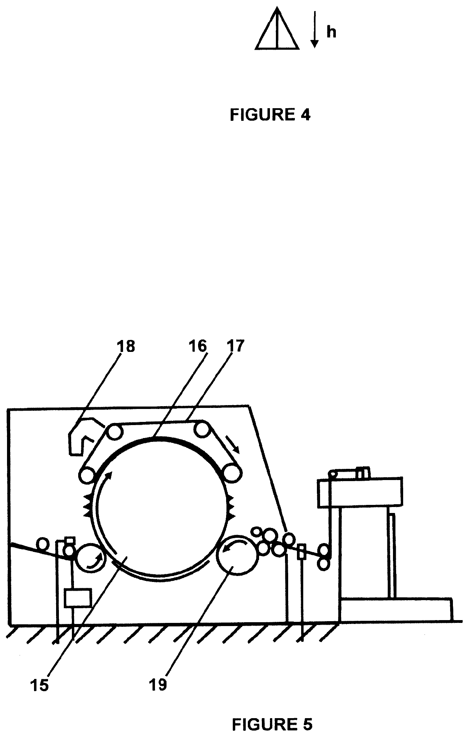

L'effilocheuse est représentée en vue en élévation à la figure 2. Elle est constituée d'un rouleau 11 d'alimentation, qui fait avancer la nappe de non-tissé consolidé en continu sur une table 12. Un rouleau 13 rotatif garni de pointes 14 métalliques défibre et effiloche la nappe de non-tissé, lorsqu'elle dépasse du bec de la table 12 dans l'espace entre la table 12 et le rouleau 13 rotatif. Le rouleau 13 rotatif de l'effilocheuse est garni de pointes (figure 3). Une pointe est représentée à la figure 4. Elle a une hauteur h de 15 mm et un diamètre à la base de 3,5 mm. Elle est en acier, de préférence en acier inoxydable. La distance entre les axes des pointes est de 10 mm.

Une carde à chapeaux est représentée en vue en élévation à la figure 5. Elle comprend principalement un tambour 15 tournant. Le tambour est entouré en partie de chapeaux 16 regroupés en une chaîne sans fin 17. Les fibres sont travaillées entre les chapeaux 16 et le tambour 15, alors que les chapeaux se déplacent lentement en sens inverse du déplacement des fibres sur le tambour 15. Il est prévu un dispositif 18 de nettoyage des chapeaux 16 sur leur parcours de retour vers le tambour 15. Un peigneur 19 détache les fibres cardées du tambour 15.

## Revendications

1. Installation de fabrication de non-tissés, comprenant :
- d'amont en aval successivement, un dispositif (1) d'ouvraison et de mélange de fibres, une carde (2) principale d'un type autre qu'une carde à chapeaux, un dispositif (3) de consolidation par jets d'eau, un sécheur (4) et une enrouleuse (5), **caractérisée par**
- une installation de recyclage de non-tissé, comprenant une effilocheuse (8), une carde (9) à chapeaux sans travailleur montée en aval de l'effilocheuse (8) dans le sens de passage du non-tissé dans l'installation, et un dispositif pour envoyer des fibres sortant de la carde (9) à chapeaux au dispositif (1) d'ouvraison et de mélange de fibres,
les lisières et déchets de production de non-tissés spunlace étant envoyés à l'effilocheuse (8) pour le recyclage.

2. Installation suivant la revendication 1, comprenant un dispositif (7) d'ensimage monté en amont de l'effilocheuse (8).

3. Installation suivant l'une des revendications 1 à 2, **caractérisée en ce que** l'effilocheuse (8) a un rouleau (13) d'effilochage garni de pointes coniques ou cylindroconiques.

4. Installation suivant la revendication 3, **caractérisée en ce que** les pointes ont une hauteur de 5 à 25 mm, de préférence de 10 à 20 mm.

5. Installation suivant la revendication 3 ou 4, **caractérisée en ce que** les pointes ont un diamètre de la base de 2 à 8 mm, de préférence de 2 à 3 mm.

6. Installation suivant l'une des revendications 3 à 5, **caractérisée en ce que** les pointes sont inclinées dans le sens de rotation du rouleau (13) d'effilochage de l'effilocheuse d'un angle de 20 à 50° avec la perpendiculaire à la surface latérale extérieure du rouleau (13) d'effilochage.

7. Installation suivant la revendication 1, **caractérisée par** un dispositif de coupe en aval de l'enrouleuse (5), des déchets de coupe du non-tissé issus du dispositif de coupe étant envoyés à l'effilocheuse (8).

8. Installation suivant la revendication 7, **caractérisée en ce que** les déchets de coupe du non-tissé sont envoyés à l'effilocheuse (8) en passant d'abord par un dispositif (7) d'ensimage.

## Patentansprüche

1. Anlage zur Herstellung von Vliesstoffen, umfassend:
- von vorn bis hinten aufeinanderfolgend eine Vorrichtung (1) zum Auflösen und zum Mischen von Fasern, eine Hauptkarde (2) eines anderen Typs als eine Deckelkarde, eine Vorrichtung (3) zum Verfestigen durch Wasserstrahlen, einen Trockner (4) und eine Wickelmaschine (5), **gekennzeichnet durch**
- eine Anlage zum Recycling von Vliesstoffen, umfassend eine Reissmaschine (8), eine Deckelkarde (9) ohne Arbeiter, die der Reissmaschine (8) in Durchlaufrichtung des Vliesstoffes in der Anlage nachgelagert ist, und eine Vorrichtung zum Zuführen der aus der Deckelkarde (9) austretenden Fasern an die Vorrichtung (1) zum Auflösen und zum Mischen von Fasern,
wobei die Kanten und Abfälle von Spunlace-Vliesstoffen der Reissmaschine (8) für das Recycling zugeführt werden.

2. Anlage nach Anspruch 1, umfassend eine der Reissmaschine (8) vorgelagerte Vorrichtung zum Schlichten (7).

3. Anlage nach einem der Ansprüche 1 bis 2, **dadurch gekennzeichnet, dass** die Reissmaschine (8) eine Reisswalze (13) hat, die mit konischen und zylindrischkonischen Spitzen bestückt ist.

4. Anlage nach Anspruch 3, **dadurch gekennzeichnet, dass** die Spitzen eine Höhe von 5 bis 25 mm, vorzugsweise von 10 bis 20 mm haben.

5. Anlage nach Anspruch 3 oder 4, **dadurch gekennzeichnet, dass** die Spitzen einen Durchmesser an der Basis von 2 bis 8 mm, vorzugsweise von 2 bis 3 mm haben.

6. Anlage nach einem der Ansprüche 3 bis 5, **dadurch gekennzeichnet, dass** die Spitzen in Drehrichtung der Reisswalze (13) der Reissmaschine in einem Winkel von 20 bis 50° mit der Senkrechten zur äusseren Seitenfläche der Reisswalze (13) geneigt sind.

7. Anlage nach Anspruch 1, **gekennzeichnet durch** eine der Wickelmaschine (5) nachgelagerte Schneidevorrichtung, wobei aus der Schneidevorrichtung austretende Schnittabfälle des Vliesstoffes der Reissmaschine (8) zugeführt werden.

8. Anlage nach Anspruch 7, **dadurch gekennzeichnet, dass** die Schnittabfälle des Vliesstoffes der Reissmaschine (8) zugeführt werden, indem sie zuerst eine Vorrichtung zum Schlichten (7) durchlaufen.

## Claims

1. Manufacturing facility for non-wovens, comprising:
- from upstream to downstream successively, a device (1) for opening and mixing fibres, a principal carding machine (2) of a type other than a flat carding machine, a device (3) for consolidation by water jets, a drier (4) and a rewinder (5),
- a facility for recycling non-wovens, comprising a fraying device (8), a flat carding machine (9) without spikes mounted downstream of the fraying device (8) in the direction of travel of the non-wovens in the facility and a device for sending fibres leaving the flat carding machine (9) to the device (1) for opening and mixing fibres,
the production selvedges and wastes of spunlace non wovens being sent to the frayer (8) for recycling.

2. Facility according to claims 1, comprising a sizing device (7) mounted upstream of the fraying device (8).

3. Facility according to one of claims 1 to 2, **characterised in that** the fraying device (8) has a fraying roller (13) fitted with conical or cylindro-conical spikes.

4. Facility according to claim 3, **characterised in that** the spikes have a height of 5 to 25 mm, preferably 10 to 20 mm.

5. Facility according to claim 3 or 4, **characterised in that** the spikes have a base diameter of 2 to 8 mm, preferably 2 to 3 mm.

6. Facility according to one of claims 3 to 5, **characterised in that** the spikes are inclined in the direction of rotation of the fraying roller (13) of the fraying device at an angle of 20° to 50° to the perpendicular to the exterior lateral surface of the fraying roller (13).

7. Facility according to claim 1, **characterised by** a cutting device downstream of the rewinder (5), the non-woven cutting waste from the cutting device being sent to the fraying device (8).

8. Facility according to claim 7, **characterised in that** the non-woven cutting waste is sent to the fraying device (8) passing first through a sizing device (7).
